(19) Europäisches Patentamt
European Patent Office
Office européen des brevets

(11) **EP 2 360 827 A2**

(12) **DEMANDE DE BREVET EUROPEEN**

(43) Date de publication:
**24.08.2011 Bulletin 2011/34**

(51) Int Cl.:
**H02M 5/22** *(2006.01)* **H02P 21/00** *(2006.01)*

(21) Numéro de dépôt: **11151939.3**

(22) Date de dépôt: **25.01.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **15.02.2010 FR 1051006**

(71) Demandeur: **Schneider Toshiba Inverter Europe SAS**
**27120 Pacy sur Eure (FR)**

(72) Inventeurs:
• **Videt, Arnaud**
**59655, Villeneuve d'Ascq (FR)**

• **Arpillière, Michel**
**75015, Paris (FR)**
• **Gruson, François**
**59190, Morbecque (FR)**
• **Delarue, Philippe**
**59223, RONCQ (FR)**
• **Le Moigne, Philippe**
**59130, NOMAIN (FR)**

(74) Mandataire: **Bié, Nicolas et al**
**Schneider Electric Industries SAS**
**Service Propriété Industrielle**
**35 rue Joseph Monier - CS 30323**
**92506 Rueil-Malmaison Cedex (FR)**

(54) **Procédé de commande d'un convertisseur matriciel et convertisseur matriciel susceptible de mettre en oeuvre le procédé**

(57)     L'invention concerne un procédé de commande mis en oeuvre dans un variateur de vitesse de type convertisseur matriciel direct. Le procédé permet d'obtenir des tensions de sortie égales à 100% des tensions d'entrée, c'est-à-dire d'utiliser la totalité de la tension disponible sur le réseau. Pour cela, le procédé comporte notamment une étape d'amplification du vecteur tension de commande ($\overrightarrow{V_{mot}}$) destiné à être appliqué à la charge jusqu'à l'amplitude d'un vecteur tension ($\overrightarrow{V_{3/3}}$) tournant défini par la liaison exacte entre les trois phases d'entrée et les trois phases de sortie, et une étape de synchronisation et de mise en phase qui permet de mettre le vecteur tension de commande ($\overrightarrow{V_{mot}}$) à la même fréquence (f2) et en phase avec le vecteur tension ($\overrightarrow{V_{3/3}}$) tournant.

Fig. 1

EP 2 360 827 A2

**Description**

La présente invention se rapporte à un procédé de commande d'un variateur de vitesse de type convertisseur matriciel ainsi qu'à un convertisseur matriciel susceptible de mettre en oeuvre ce procédé.

Un variateur de vitesse de type convertisseur matriciel direct comporte neuf interrupteurs bidirectionnels arrangés au sein d'une matrice de commutation comportant trois cellules de commutation. Cette matrice de commutation est connectée d'un côté à trois phases d'entrée u, v, w reliées à une source de tension alternative, par exemple au réseau, et de l'autre côté à trois phases de sortie a, b, c reliées à une charge électrique telle que par exemple un moteur. Les interrupteurs sont commandés individuellement pour connecter une phase de sortie à l'une quelconque des phases d'entrée.

Généralement, les ordres de commande des interrupteurs d'un convertisseur matriciel peuvent être générés par différentes méthodes telles que la Modulation par Vecteur d'Espace (ou SVM pour "Space Vector Modulation"), modulation vectorielle ou modulation intersective.

Quelle que soit la méthode employée pour commander le convertisseur matriciel, il est connu que l'amplitude maximale des tensions de sortie appliquées à la charge sont limitées à 87% de l'amplitude des tensions d'entrée disponibles sur le réseau. Cet aspect est notamment décrit dans la demande de brevet référencée US2008/049469. Le document IEEE TRANSACTIONS ON INDUSTRIAL ELECTRONICS, vol. 38, N˚3, June 1991 intitulé "A novel control method for forced commutated cycloconverters using instantaneous values of input line-to-line voltages" et rédigé par Akio ISHIGURO, Takeshi FURUHASHI et Shigeru OKUMA décrit également ce phénomène.

Cependant, pour certaines applications et pour optimiser le rendement, il peut s'avérer nécessaire de pouvoir utiliser le maximum de l'amplitude des tensions d'entrée disponibles sur le réseau.

Le but de l'invention est de proposer un procédé de commande d'un variateur de vitesse de type convertisseur matriciel permettant d'utiliser l'amplitude maximale des tensions d'entrée provenant du réseau tout en limitant au maximum les distorsions sur les tensions de sortie.

Ce but est atteint par un procédé de commande mis en oeuvre dans un variateur de vitesse de type convertisseur matriciel direct qui comporte :

- trois phases d'entrée connectées à une source de tension alternative appliquant des tensions d'entrée entre les phases d'entrée et trois phases de sortie connectées à une charge électrique,

- neuf interrupteurs électroniques bidirectionnels en courant et en tension répartis dans trois cellules de commutation et destinés à être commandés individuellement pour connecter une phase de sortie à l'une quelconque des phases d'entrée en vue d'appliquer un vecteur tension de commande à la charge,

le procédé étant caractérisé en ce qu'il comporte :

- une étape de synchronisation et de mise en phase qui permet de mettre le vecteur tension de commande à la même fréquence qu'un vecteur tension tournant, défini par la liaison exacte entre les trois phases d'entrée et les trois phases de sortie, et en phase avec ce vecteur tension tournant,

- une étape d'amplification du vecteur tension de commande au-delà de 87% de l'amplitude des tensions d'entrée et jusqu'à l'amplitude du vecteur tension tournant.

Selon une particularité de l'invention, l'étape de synchronisation et de mise en phase et l'étape d'amplification sont réalisées au moins en partie simultanément.

Selon une autre particularité, le vecteur tension tournant choisi est celui qui est le plus proche et qui tourne dans le même sens que le vecteur tension de commande.

Selon un mode de réalisation particulier, l'étape d'amplification débute lorsque le déphasage du vecteur tension de commande par rapport au vecteur tension tournant est inférieur à $\pi/3$. Préférentiellement, l'étape d'amplification débute lorsque le déphasage du vecteur tension de commande par rapport au vecteur tension tournant est inférieur à $\pi/6$. De manière encore plus avantageuse, l'étape d'amplification et l'étape de mise en phase et de synchronisation sont mises en oeuvre en maintenant à chaque instant la valeur maximale des tensions composées issues du vecteur tension de commande inférieure à la valeur maximale des tensions composées entre les phases d'entrée.

L'invention concerne également un variateur de vitesse de type convertisseur matriciel comportant :

- trois phases d'entrée connectées à une source de tension alternative appliquant des tensions d'entrée entre les phases d'entrée et trois phases de sortie connectées à une charge électrique,

- neuf interrupteurs électroniques bidirectionnels en courant et en tension répartis dans trois cellules de commutation et destinés à être commandés individuellement pour connecter une phase de sortie à l'une quelconque des phases d'entrée en vue d'appliquer un vecteur tension de commande à la charge,

- des moyens de commande agencé pour amplifier le vecteur tension de commande au-delà de 87% de l'amplitude des tensions d'entrée et jusqu'à l'amplitude d'un vecteur tension tournant défini par la liaison exacte entre les trois phases d'entrée et les trois phases de sortie et pour synchroniser le vecteur tension de commande à la même fréquence que le vecteur tension tournant et mettre en phase le vecteur tension de commande avec le vecteur tension tournant.

Selon une particularité du variateur de vitesse, le vecteur tension tournant choisi est celui qui est le plus proche et qui tourne dans le même sens que le vecteur tension de commande.

Selon une autre particularité, les moyens de commande pour amplifier le vecteur tension de commande sont activés lorsque le déphasage du vecteur tension de commande par rapport au vecteur tension tournant est inférieur à $\pi/3$ et préférentiellement inférieur $\pi/6$. Avantageusement, les moyens de commande sont actionnés en maintenant à chaque instant la valeur maximale des tensions composées issues du vecteur tension de commande inférieure à la valeur maximale des tensions composées entre les phases d'entrée.

D'autres caractéristiques et avantages vont apparaître dans la description détaillée qui suit en se référant à un mode de réalisation donné à titre d'exemple et représenté par les dessins annexés sur lesquels :

- la figure 1 représente schématiquement le principe de réalisation d'un variateur de vitesse de type convertisseur matriciel,

- la figure 2 représente un diagramme illustrant le principe de fonctionnement du procédé de commande de l'invention,

- la figure 3 montre un repère dans lequel est positionné le vecteur tension de commande,

- la figure 4 représente le repère employé pour exprimer le vecteur tension de commande en fonction notamment du vecteur tournant choisi,

- les figures 5A à 5C représentent différentes courbes qui permettent d'illustrer le principe de fonctionnement de l'invention.

Dans la suite de la description, pour des raisons de simplification, la limitation de l'amplitude maximale des tensions de sortie a été fixée à 87% de l'amplitude des tensions d'entrée alors qu'elle correspond en réalité au rapport bien connu dans l'état de la technique de $\sqrt{3}/2$ entre les tensions.

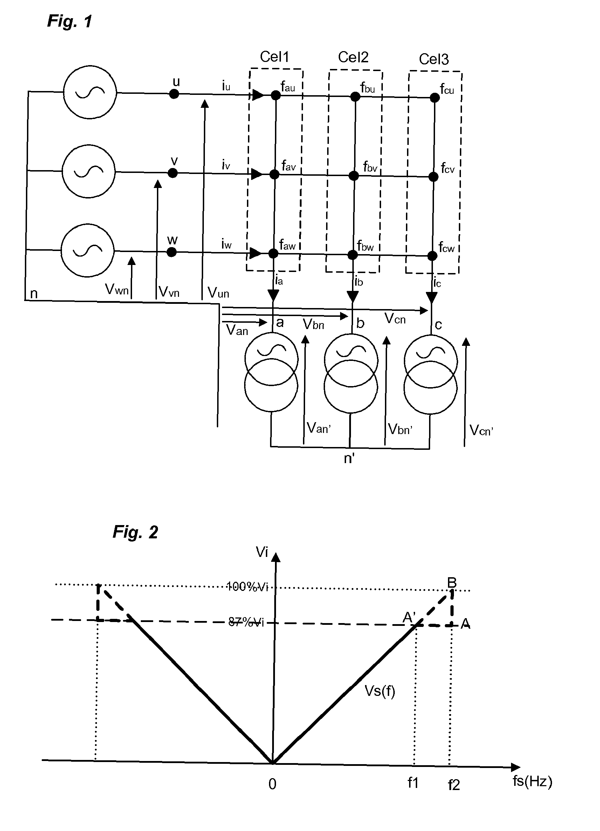

En référence à la figure 1, un variateur de vitesse de type convertisseur matriciel comporte neuf interrupteurs bidirectionnels en courant et en tension par exemple de type double IGBTs+diodes antiparallèles en série ou RB-IGBT (pour Reverse Blocking IGBT qui comporte deux interrupteurs IGBT) arrangés sous la forme d'une matrice de commutation comportant trois cellules de commutation Cel1, Cel2, Cel3 de trois interrupteurs chacune. Le variateur comporte en outre trois phases d'entrée u, v, w connectées à une source de tension alternative, par exemple le réseau électrique, et trois phases de sortie a, b, c connectées à une charge électrique (non représentée) à commander, par exemple un moteur électrique.

Chacun des neuf interrupteurs bidirectionnels est commandé individuellement pour connecter une phase de sortie a, b, c à l'une quelconque des phases d'entrée u, v, w. La commande des interrupteurs bidirectionnels est réalisée à partir d'une matrice de commande 3X3 comportant les rapports cycliques des interrupteurs de la matrice de commutation. Chaque cellule de commutation Cel1, Cel2, Cel3 commande la tension sur une phase de sortie a, b ou c à partir des rapports cycliques de trois interrupteurs connectés aux trois phases d'entrée u, v, w. En fonctionnement, un seul interrupteur par cellule de commutation Cel1, Cel2, Cel2 peut être commandé à l'état fermé. Sur la figure 1, les points désignés fau, fav, faw, fbu, fbv, fbw, fcu, fcv, fcw représentent chacun un interrupteur bidirectionnel.

Par convention les interrupteurs de chaque cellule de commutation sont numérotés de 1 à 3. Ainsi pour identifier l'état actif de la matrice de commutation, on indique le numéro de l'interrupteur fermé dans chaque cellule. Par exemple, l'état actif 131 signifie que l'interrupteur du haut (fau-n˚1) de la cellule Cel1 est fermé, que l'interrupteur du bas (fbw-n˚3) de la cellule Cel2 est fermé et que l'interrupteur du haut (fcu-n˚1) de la cellule Cel3 est fermé.

La matrice de commande 3X3 se présente de la manière suivante :

$$M = \begin{Bmatrix} a_u & b_u & c_u \\ a_v & b_v & c_v \\ a_w & b_w & c_w \end{Bmatrix}$$

Dans laquelle :

- au, $a_v$, $a_w$ sont les rapports cycliques respectifs des interrupteurs fau, fav, faw,

- $b_u$, $b_v$, $b_w$ sont les rapports cycliques respectifs des interrupteurs fbu, fbv, fbw,

- $c_u$, $c_v$, $c_w$ sont les rapports cycliques respectifs des interrupteurs fcu, fcv, fcw.

La matrice de commande peut être obtenue de différentes manières telles que la Modulation par Vecteur d'Espace (ou SVM pour "Space Vector Modulation"), modulation vectorielle ou modulation intersective.

Le vecteur tension de commande $\overleftarrow{Vmot}$ représente les tensions de sortie à appliquer au moteur.

En référence à la figure 2, dans un convertisseur matriciel du type décrit ci-dessus, il est connu que les tensions simples de sortie Van', Vbn', Vcn' évoluent en fonction de la fréquence fs du courant injecté dans la charge (appelé également fréquence statorique) selon une loi de commande déterminée, par exemple une loi de type U/F comme représentée sur la figure 2. Sur la figure 2, les tensions de sortie augmentent en fonction de la fréquence de sortie fs jusqu'à une amplitude maximale sensiblement égale à 87% ($\sqrt{3}/2$) de l'amplitude des tensions simples d'entrée Vun, Vvn, Vwn.

Le principe de l'invention consiste à pouvoir appliquer à la charge un vecteur tension de commande $\overleftarrow{Vmot}$ dont l'amplitude est égale à 100% de l'amplitude des tensions d'entrée Vun, Vvn, Vwn tout en limitant et même en évitant les distorsions sur les tensions appliquées au moteur.

Pour cela, le convertisseur matriciel de l'invention met en oeuvre un procédé de commande particulier permettant d'obtenir des tensions de sortie Van', Vbn', Vcn' dont l'amplitude est égale à 100% des tensions d'entrée Vun, Vvn, Vwn et qui sont synchronisées à la fréquence f2 du réseau. Le procédé de commande de l'invention est donc mis en oeuvre de telle manière que l'amplitude des tensions de sortie Van', Vbn', Vcn' peut dépasser le seuil de 87% de l'amplitude des tensions d'entrée Vun, Vvn, Vwn. La figure 2 illustre le principe de l'invention qui consiste par exemple à passer du point A' au point B par le trait en pointillés. Le point A' correspond par exemple à une amplitude maximale des tensions de sortie Van', Vbn', Vcn' égale à 87% de l'amplitude des tensions d'entrée Vun, Vvn, Vwn, le vecteur tension de commande $\overleftarrow{Vmot}$ représentant les tensions de sortie étant alors à une fréquence f1 qui peut être supérieure ou inférieure à la fréquence f2 du réseau. Sur la figure 2, le point A' peut alors se trouver à n'importe quel endroit sur la droite horizontale en pointillés représentant une amplitude des tensions de sortie égale à 87% de l'amplitude des tensions d'entrée.

Pour obtenir les tensions de sortie Van', Vbn', Vcn' égales à 100% des tensions d'entrée Vun, Vvn, Vwn, le procédé de commande de l'invention comporte deux étapes, une étape de synchronisation et de mise en phase du vecteur tension de commande et une étape d'amplification du vecteur tension de commande. Ces deux étapes peuvent être mises en oeuvre l'une après l'autre ou, de manière avantageuse, au moins en partie simultanément.

Plus précisément, le procédé de commande de l'invention comporte donc une étape de synchronisation et de mise en phase du vecteur tension de commande $\overleftarrow{Vmot}$ avec un vecteur tension $\overrightarrow{V_{3/3}}$ tournant et une étape d'amplification de l'amplitude du vecteur tension de commande $\overleftarrow{Vmot}$ jusqu'à obtenir 100% de l'amplitude des tensions d'entrée.

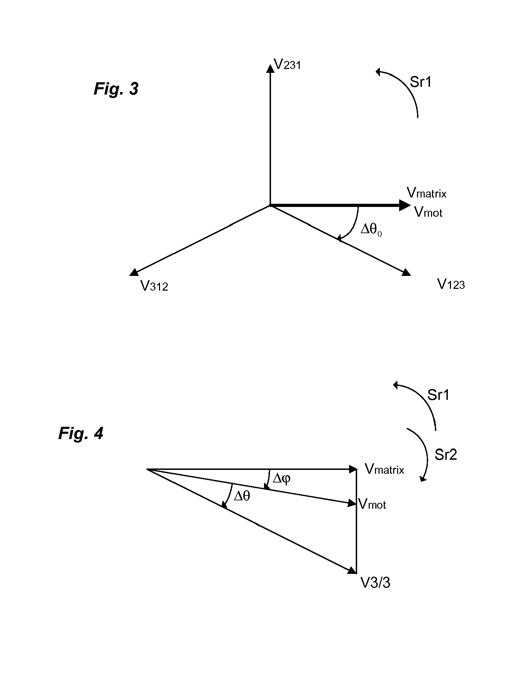

Dans la représentation vectorielle d'un convertisseur matriciel, il existe six vecteurs tournants ($\overrightarrow{V_{3/3}}$) permettant de connecter exactement chaque phase de sortie à une phase d'entrée différente. Ces six vecteurs tournants sont définis par les combinaisons de commutation des interrupteurs bidirectionnels du convertisseur suivantes : 123, 132, 213, 321, 231, 312. Parmi ces six vecteurs tournants, trois vecteurs tournent dans le sens direct (Sr1, figures 3 et 4), c'est-à-dire les vecteurs $\overrightarrow{V_{123}}$, $\overrightarrow{V_{231}}$, $\overrightarrow{V_{312}}$ et trois autres tournent dans le sens indirect (Sr2, figure 4) $\overrightarrow{V_{132}}$,

$\overrightarrow{V_{231}}$ , $\overrightarrow{V_{312}}$ . Dans la suite de la description, on suppose arbitrairement que le vecteur tension de commande $\overleftarrow{Vmot}$ tourne en sens direct (Sr1). Par conséquent, le vecteur tension $\overrightarrow{V_{3/3}}$ sera choisi parmi les vecteurs $\overrightarrow{V_{123}}$ , $\overrightarrow{V_{231}}$ , $\overrightarrow{V_{312}}$ . Bien entendu, les trois autres vecteurs tension $\overrightarrow{V_{3/3}}$ ( $\overrightarrow{V_{132}}$ , $\overrightarrow{V_{231}}$ , $\overrightarrow{V_{312}}$ ) qui tournent en sens inverse seraient utilisables si le vecteur tension de commande $\overleftarrow{Vmot}$ tournait en sens indirect (Sr2) par rapport au réseau (changement de sens de rotation du moteur).

Sur la figure 2, le passage direct du point A' à B, c'est-à-dire sans passer par A, permet notamment d'atteindre l'objectif de l'invention sans créer un défluxage sur le moteur mais implique forcément des contraintes d'accélération.

En théorie, la trajectoire suivie par le vecteur tension de commande $\overleftarrow{Vmot}$ peut être modélisée en tenant compte d'un temps de synchronisation $t_{sync}$ permettant d'amener le vecteur tension de commande $\overleftarrow{Vmot}$ à la fréquence f2 du réseau, en définissant l'accélération nécessaire pour respecter ce temps de synchronisation $t_{sync}$, et en respectant un profil de montée en tension déterminé lui permettant de limiter ou même d'éviter les distorsions sur les tensions de sortie.

Pour déterminer ce temps de synchronisation $t_{sync}$ et l'accélération A nécessaire pour respecter ce temps de synchronisation $t_{sync}$, on suppose que le moteur tourne à la fréquence f1 inférieure à la fréquence du réseau f2, qui est par exemple égale à 50Hz. Entre le vecteur tension de commande $\overleftarrow{Vmot}$ et le plus proche des vecteurs tournants $\overrightarrow{V_{3/3}}$ , il existe donc un écart de fréquence qui vaut :

$$\Delta f = f2 - f1 \qquad\qquad (1)$$

Cet écart de fréquence vaut $\Delta f_0$ à l'instant initial et tend vers zéro lorsque l'on s'approche du synchronisme entre le vecteur tension de commande $\overleftarrow{Vmot}$ et le vecteur tournant $\overrightarrow{V_{3/3}}$ .

De plus on note $\Delta\theta$ l'angle formé entre le vecteur tension de commande $\overleftarrow{Vmot}$ et le vecteur tournant $\overrightarrow{V_{3/3}}$ choisi, cet angle valant initialement $\Delta\theta_0$. L'objectif de l'étape de synchronisation et de mise en phase est d'annuler cet angle.

Par ailleurs, soit A l'accélération, exprimée en Hz/s et supposée constante, appliquée au moteur pour lui permettre d'atteindre la fréquence f2 du réseau. On obtient alors :

$$\Delta f(t) = \Delta f_0 - At$$

et

$$\Delta\theta(t) = \Delta\theta_0 - 2\pi\Delta f_0 t + \pi A t^2 \qquad (2)$$

Le système est synchronisé à l'instant $t_{sync}$ vérifiant :

$$\Delta f(t_{sync}) = 0 \Rightarrow A t_{sync} = \Delta f_0$$

et

$$\Delta\theta(t_{sync}) = 0 \Rightarrow 2\pi\Delta f_0 t_{sync} - \pi(At_{sync})t_{sync} = \pi\Delta f_0 t_{sync} = \Delta\theta_0 \qquad (3)$$

On obtient donc :

$$t_{sync} = \frac{\Delta\theta_0}{\pi\Delta f_0} \qquad\qquad A = \frac{\pi\Delta f_0^2}{\Delta\theta_0} \qquad (4)$$

Sachant que, préférentiellement, pour éviter toute distorsion, la montée en tension ne peut commencer que lorsque $\Delta\theta$ est inférieur à $\pi/6$, on peut retrouver, en fonction de l'écart de fréquence initial $\Delta f_0$, le temps de synchronisation $t_{sync}$ et l'accélération A nécessaire pour parvenir au synchronisme entre le vecteur tension de commande $\overrightarrow{Vmot}$ et le vecteur tournant $\overrightarrow{V_{3/3}}$ choisi lorsque $\Delta\theta_0 = \pi/6$ :

$$t_{sync} = \frac{1}{6\Delta f_0} \qquad\qquad A = 6\Delta f_0^2 \qquad (5)$$

En ce qui concerne la montée en tension, il existe une infinité de profils possibles pour augmenter l'amplitude du vecteur tension de commande $\overrightarrow{Vmot}$ sans saturer la commande, c'est-à-dire sans provoquer de distorsion sur les tensions de sortie Vun', Vvn', Vwn'. Il peut s'agir par exemple d'exprimer, par la relation suivante, l'amplitude du vecteur tension de commande $\overrightarrow{Vmot}$ en fonction de la différence de phase représentée par $\Delta\theta$ entre le vecteur tension de commande et le vecteur tournant choisi, avec $\Delta\theta < \pi/6$ :

$$V_{mot}(\Delta\theta) = \frac{\sqrt{3}}{2} \cdot \frac{V_{mains}}{\cos(\pi/6 - \Delta\theta)} \qquad (6)$$

sachant que $V_{mains}$ correspond à l'amplitude du vecteur tournant choisi $\overrightarrow{V_{3/3}}$, qui est l'amplitude de la tension réseau.

Si $V_{mot}(\Delta\theta)$ dépasse le profil défini par l'équation (6) défini ci-dessus, alors il se produira une distorsion basse fréquence liée à une saturation périodique de la commande moteur.

En pratique, selon le mode préférentiel de réalisation dans lequel les deux étapes définies ci-dessus sont réalisées au moins en partie simultanément, le procédé de commande de l'invention consiste à reconstituer le vecteur tension de commande $\overrightarrow{Vmot}$ à l'aide d'un vecteur tension déterminé $\overrightarrow{Vmatrix}$, utilisé classiquement en modulation matricielle, c'est-à-dire limité à 87% de l'amplitude des tensions d'entrée et du vecteur tension tournant $\overrightarrow{V_{3/3}}$ défini comme celui des trois vecteurs tournants $\overrightarrow{V_{123}}$, $\overrightarrow{V_{231}}$, $\overrightarrow{V_{312}}$ qui est le plus proche du vecteur tension de commande $\overrightarrow{Vmot}$. Le vecteur tension $\overrightarrow{Vmatrix}$ peut être celui utilisé par exemple dans la méthode décrite dans la publication référencée IEEE TRANSACTIONS ON INDUSTRIAL ELECTRONICS, vol. 38, N°3, June 1991 intitulé "A novel control method for forced commutated cycloconverters using instantaneous values of input line-to-line voltages" et rédigé par Akio ISHIGURO, Takeshi FURUHASHI et Shigeru OKUMA. Il peut également être utilisé par toute autre méthode telle que la méthode améliorée décrite dans la demande de brevet déposée par la demanderesse, en France, le 18/12/2008, sous le n°FR0858759.

Le vecteur tension $\overrightarrow{Vmatrix}$ tourne à la fréquence f2 du réseau et est d'amplitude maximale égale à 87% de l'amplitude des tensions d'entrée. Ce vecteur tension $\overrightarrow{Vmatrix}$ est choisi déphasé en avance d'une valeur inférieure à

$\pi/3$, préférentiellement de $\pi/6$ par rapport au vecteur tournant $\overrightarrow{V_{3/3}}$ choisi. Le vecteur tension $\overleftarrow{Vmatrix}$ et le vecteur tournant $\overrightarrow{V_{3/3}}$ tournent dans le même sens (Sr1) à la fréquence f2, par exemple égale à 50Hz.

Initialement, le vecteur tension de commande $\overleftarrow{Vmot}$ est confondu avec le vecteur tension $\overleftarrow{Vmatrix}$ (figure 3) et ces deux vecteurs sont donc déphasés de $\pi/6$ par rapport au vecteur tournant $\overrightarrow{V_{3/3}}$ choisi.

Le déphasage initial de $\pi/6$ doit être préférentiellement respecté pour éviter les distorsions sur les tensions de sortie. Cela revient à dire de manière générale que le procédé de l'invention doit être mis en oeuvre en maintenant à chaque instant la valeur maximale des tensions composées entre les phases issues du vecteur tension de commande $\overleftarrow{Vmot}$ inférieure à la valeur maximale des tensions composées appliquées entre les phases d'entrée.

La synchronisation en fréquence et la mise en phase progressive du vecteur tension de commande $\overleftarrow{Vmot}$ avec le vecteur tournant $\overrightarrow{V_{3/3}}$ choisi est réalisée en se plaçant dans le repère tournant composé du vecteur tournant $\overrightarrow{V_{3/3}}$ choisi et du vecteur tension $\overleftarrow{Vmatrix}$ (figure 4), ce repère tournant donc dans le même sens que les deux vecteurs qui le composent, à la fréquence f2 de ces deux vecteurs.

Afin de se placer dans le cas théorique décrit ci-dessus, on considère que le vecteur tension de commande $\overleftarrow{Vmot}$ tourne dans le sens inverse (Sr2) de celui du repère à une fréquence égale à $\Delta f = f2-f1$

A partir de ce repère, on peut alors exprimer le vecteur tension de commande $\overleftarrow{Vmot}$ en fonction du vecteur tournant $\overrightarrow{V_{3/3}}$ choisi et du vecteur tension $\overleftarrow{Vmatrix}$ formant le repère. La décomposition du vecteur tension de commande $\overleftarrow{Vmot}$ est réalisée à l'aide d'une fonction $\alpha(t)$ dépendante du temps selon la relation suivante :

$$V_{mot} = \alpha V_{3/3} + (1-\alpha) V_{matrix}$$

$$\overrightarrow{V_{mot}} = \overrightarrow{V_{matrix}}$$

$\alpha=0$ correspond à l'état initial dans lequel

$\alpha=1$ correspond à l'état où le vecteur tension de commande $\overleftarrow{Vmot}$ est synchronisé et en phase avec le vecteur tournant $\overrightarrow{V_{3/3}}$ choisi et à une amplitude égale à celle des tensions d'entrée.

La fonction $\alpha(t)$ est par exemple choisie de telle sorte que l'accélération A du moteur soit linéaire.

Pour déterminer $\alpha$, on considère le nouveau repère dans lequel l'état initial correspond à $\overrightarrow{V_{mot}} = \overrightarrow{V_{matrix}}$ et l'angle $\Delta\varphi$ formé entre les deux vecteurs $\overrightarrow{V_{mot}}$ et $\overrightarrow{V_{matrix}}$ .

Par rapport à l'angle $\Delta\theta$ qui a été défini précédemment et en considérant un déphasage initial $\Delta\theta_0$ de $\pi/6$ entre le vecteur tension $\overleftarrow{Vmatrix}$ et le vecteur tournant $\overrightarrow{V_{3/3}}$ choisi, on obtient alors :

$$\Delta\varphi = \pi/6 - \Delta\theta \qquad\qquad (7)$$

Par ailleurs, $\alpha$ est associé à $\Delta\varphi$ par l'approximation géométrique suivante :

$$\alpha \approx \frac{6}{\pi} \cdot \Delta\varphi \qquad\qquad (8)$$

A partir de la relation (2) ci-dessus, la variation de l'angle Δφ en fonction du temps s'exprime de la manière suivante :

$$\Delta\varphi(t) = 2\pi\Delta f\,0t - \pi At^2 \qquad (9)$$

A partir de la relation (8) ci-dessus, on obtient alors :

$$\alpha(t) \approx 12\Delta f_0 t - 6At^2 \qquad (10)$$

Par ailleurs, à partir des relations (5) définies ci-dessus, on obtient :

$$\Delta f_0 = \sqrt{\frac{A}{6}} \ \text{ et } \ t_{sync} = \frac{1}{6\Delta f_0}$$

Selon l'invention, connaissant l'écart de fréquence initial $\Delta f_0$, il est ainsi possible, selon l'accélération A, de suivre la variation de $\alpha$ en fonction du temps et ainsi de connaître la position et l'amplitude du vecteur tension de commande $\overrightarrow{V_{mot}}$ dans le repère formé par le vecteur tension de référence $\overrightarrow{V_{matrix}}$ et le vecteur tournant $\overrightarrow{V_{3/3}}$ choisi.

Par exemple, si nous souhaitons avoir une accélération de 50Hz/s, l'écart de fréquence initial $\Delta f_0$ doit être de 2,9Hz. Si la fréquence f2 vaut par exemple 50Hz, la synchronisation et la mise en phase devront donc débuter lorsque la fréquence f1 du vecteur tension de commande $\overrightarrow{V_{mot}}$ est à 47,1 Hz. Le temps pour synchroniser le vecteur tension de commande $\overrightarrow{V_{mot}}$ sur le vecteur tournant $\overrightarrow{V_{33}}$ choisi et pour amplifier le vecteur tension de commande $\overrightarrow{V_{mot}}$ sur le vecteur tournant $\overrightarrow{V_{33}}$ choisi sera alors de 57,7ms.

Dans un autre exemple, si l'on choisit de démarrer la synchronisation et la mise en phase plus tôt lorsque la fréquence f1 du vecteur tension de commande $\overrightarrow{V_{mot}}$ est de 43,5Hz (cas d'une loi en U/F), avec un écart de fréquence initial $\Delta f_0$ de 6,5Hz par rapport à la fréquence réseau f2, il sera nécessaire d'appliquer une accélération de 253,5Hz/s. Le temps $t_{sync}$ pour accroître la fréquence de sortie de 6,5Hz et augmenter l'amplitude du vecteur tension de commande $\overrightarrow{V_{mot}}$ de 13% sera alors de 25ms.

Comme décrit ci-dessus, en ce qui concerne la montée en tension sans saturation de la commande, le profil suit l'équation (6) reprise ci-dessous :

$$V_{mot}(\Delta\theta) = \frac{\sqrt{3}}{2} \cdot \frac{V_{mains}}{\cos(\pi/6 - \Delta\theta)} \qquad (6)$$

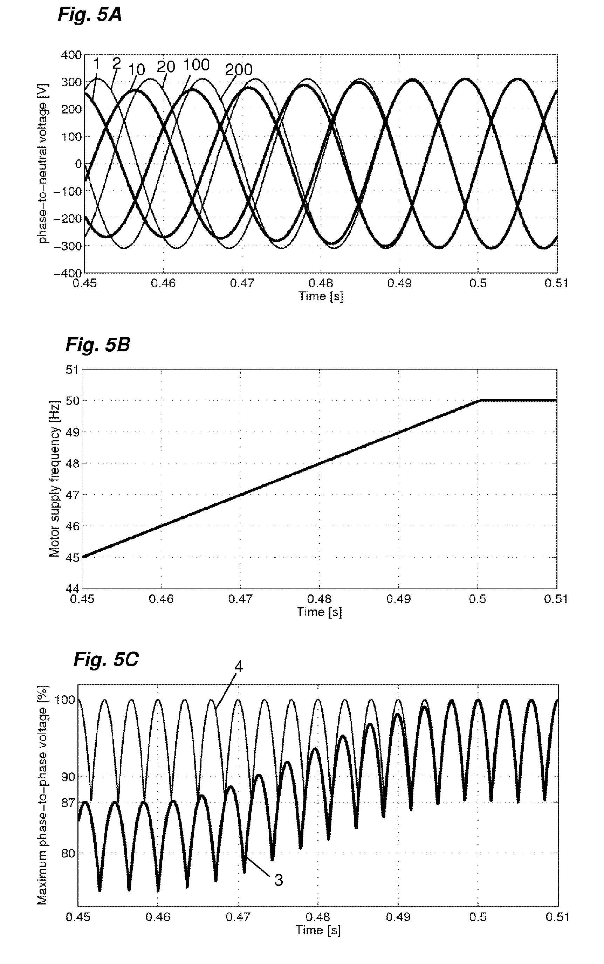

Le principe de fonctionnement du procédé de l'invention est illustré par les figures 5A à 5C dans le cas où la montée en tension est simultanée à la synchronisation et la mise en phase.

La figure 5A montre par trois courbes 2, 20, 200 la variation des trois tensions simples d'entrée en fonction du temps et par trois courbes 1, 10, 100 la variation de trois tensions simples de sortie issues du vecteur tension de commande $\overrightarrow{V_{mot}}$ à appliquer au moteur. On peut voir que les courbes 1, 10, 100 représentant les tensions simples de sortie issues du vecteur tension de commande $\overrightarrow{V_{mot}}$ se superposent progressivement aux courbes 2, 20, 200 représentant les tensions simples d'entrée, c'est-à-dire que les tensions sont en phase et se synchronisent en fréquence et en amplitude.

La figure 5B montre avec la même échelle de temps que la figure 5A, l'évolution de la fréquence d'alimentation du moteur. On peut ainsi voir que la fréquence n'a pas encore atteint f2 (50Hz) alors que la tension continue d'augmenter comme cela est représenté sur la figure 5A. A la fréquence f2 (figure 5B), c'est-à-dire au synchronisme, les tensions simples issues du vecteur tension de commande $\overrightarrow{V_{mot}}$ sont à 100% des tensions simples d'entrée (figure 5A).

La figure 5C montre également sur la même fenêtre temporelle que les deux figures précédentes l'enveloppe 4 des tensions composées entre phases d'entrée et l'enveloppe 3 des tensions composées entre les phases issues du vecteur tension de commande $\overrightarrow{V_{mot}}$. On peut ainsi voir que la valeur maximale des tensions composées entre phases issues du vecteur tension de commande $\overrightarrow{V_{mot}}$ est toujours inférieure à la valeur maximale des tensions composées entre phases d'entrée, ce qui permet de garantir l'absence de distorsion sur les tensions de sortie. Comme décrit ci-dessus, la valeur maximale des tensions composées issues du vecteur tension de commande $\overrightarrow{V_{mot}}$ est d'abord plafonnée à 87% de la valeur maximale des tensions composées entre les phases d'entrée. Puis, grâce au procédé de commande de l'invention, lorsque t=460ms et alors que la fréquence d'alimentation du moteur vaut alors 46Hz (figure 5B), cette valeur augmente progressivement. A t=500ms, on obtient ainsi 100% des tensions d'entrée à une fréquence de 50Hz.

Le procédé de l'invention permet donc de maximiser le rendement du convertisseur. Il s'applique à un convertisseur matriciel direct mais pas à un convertisseur matriciel indirect. Ce procédé permet d'augmenter le couple maximal moteur à la vitesse nominale en ramenant le flux moteur au flux nominal et ainsi d'augmenter le rendement du convertisseur.

## Revendications

1. Procédé de commande mis en oeuvre dans un variateur de vitesse de type convertisseur matriciel direct qui comporte :

   - trois phases d'entrée (u, v, w) connectées à une source de tension alternative appliquant des tensions d'entrée entre les phases d'entrée et trois phases de sortie (a, b, c) connectées à une charge électrique,
   - neuf interrupteurs électroniques bidirectionnels en courant et en tension (fau, fav, faw, fbu, fbv, fbw, fcu, fcv, fcw) répartis dans trois cellules de commutation (Cel1, Cel2, Cel3) et destinés à être commandés individuellement pour connecter une phase de sortie à l'une quelconque des phases d'entrée en vue d'appliquer un vecteur tension de commande à la charge ( $\overrightarrow{V_{mot}}$ ),

   le procédé étant **caractérisé en ce qu'**il comporte :

   - une étape de synchronisation et de mise en phase qui permet de mettre le vecteur tension de commande ( $\overrightarrow{V_{mot}}$ ) à la même fréquence (f2) qu'un vecteur tension ( $\overrightarrow{V_{3/3}}$ ) tournant, défini par la liaison exacte entre les trois phases d'entrée et les trois phases de sortie, et en phase avec ce vecteur tension ( $\overrightarrow{V_{3/3}}$ ) tournant,
   - une étape d'amplification du vecteur tension de commande ( $\overrightarrow{V_{mot}}$ ) au-delà de 87% de l'amplitude des tensions d'entrée et jusqu'à l'amplitude du vecteur tension ( $\overrightarrow{V_{3/3}}$ ) tournant.

2. Procédé selon la revendication 1, **caractérisé en ce que** l'étape de synchronisation et de mise en phase et l'étape d'amplification sont réalisées au moins en partie simultanément.

3. Procédé selon la revendication 1 ou 2, **caractérisé en ce que** le vecteur tension tournant ($\overrightarrow{V_{3/3}}$) choisi est celui qui est le plus proche et qui tourne dans le même sens que le vecteur tension de commande ($\overrightarrow{V_{mot}}$).

4. Procédé selon l'une des revendications 1 à 3, **caractérisé en ce que** l'étape d'amplification débute lorsque le déphasage du vecteur tension de commande ($\overrightarrow{V_{mot}}$) par rapport au vecteur tension tournant ($\overrightarrow{V_{3/3}}$) est inférieur à $\pi/3$.

5. Procédé selon l'une des revendications 1 à 3, **caractérisé en ce que** l'étape d'amplification débute lorsque le déphasage du vecteur tension de commande ($\overrightarrow{V_{mot}}$) par rapport au vecteur tension tournant ($\overrightarrow{V_{3/3}}$) est inférieur à $\pi/6$.

6. Procédé de commande selon l'une des revendications 1 à 3, **caractérisé en ce que** l'étape d'amplification et l'étape de mise en phase et de synchronisation sont mises en oeuvre en maintenant à chaque instant la valeur maximale des tensions composées issues du vecteur tension de commande ($\overrightarrow{V_{mot}}$) inférieure à la valeur maximale des tensions composées entre les phases d'entrée.

7. Variateur de vitesse de type convertisseur matriciel comportant :

   - trois phases d'entrée (u, v, w) connectées à une source de tension alternative appliquant des tensions d'entrée entre les phases d'entrée et trois phases de sortie (a, b, c) connectées à une charge électrique,
   - neuf interrupteurs électroniques bidirectionnels en courant et en tension (fau, fav, faw, fbu, fbv, fbw, fcu, fcv, fcw) répartis dans trois cellules de commutation (Cel1, Cel2, Cel3) et destinés à être commandés individuellement pour connecter une phase de sortie à l'une quelconque des phases d'entrée en vue d'appliquer un vecteur tension de commande à la charge ($\overrightarrow{V_{mot}}$),

   le variateur étant **caractérisé en ce qu'**il comporte :

   - des moyens de commande agencé pour amplifier le vecteur tension de commande ($\overrightarrow{V_{mot}}$) au-delà de 87% de l'amplitude des tensions d'entrée et jusqu'à l'amplitude d'un vecteur tension ($\overrightarrow{V_{3/3}}$) tournant défini par la liaison exacte entre les trois phases d'entrée et les trois phases de sortie et pour synchroniser le vecteur tension de commande ($\overrightarrow{V_{mot}}$) à la même fréquence (f2) que le vecteur tension ($\overrightarrow{V_{3/3}}$) tournant et mettre en phase le vecteur tension de commande ($\overrightarrow{V_{mot}}$) avec le vecteur tension ($\overrightarrow{V_{3/3}}$) tournant.

8. Variateur de vitesse selon la revendication 7, **caractérisé en ce que** le vecteur tension tournant ($\overrightarrow{V_{3/3}}$) choisi est celui qui est le plus proche et qui tourne dans le même sens que le vecteur tension de commande ($\overrightarrow{V_{mot}}$).

9. Variateur de vitesse selon la revendication 7 ou 8, **caractérisé en ce que** les moyens de commande pour amplifier le vecteur tension de commande ($\overrightarrow{V_{mot}}$) sont activés lorsque le déphasage du vecteur tension de commande ($\overrightarrow{V_{mot}}$) par rapport au vecteur tension tournant ($\overrightarrow{V_{3/3}}$) est inférieur à $\pi/3$.

**10.** Variateur de vitesse selon l'une des revendications 7 ou 8, **caractérisé en ce que** les moyens de commande pour amplifier le vecteur tension de commande ( $\overrightarrow{V_{mot}}$ ) sont activés lorsque le déphasage du vecteur tension de commande ( $\overrightarrow{V_{mot}}$ ) par rapport au vecteur tension tournant ( $\overrightarrow{V_{3/3}}$ ) est inférieur à π/6.

**11.** Variateur de vitesse selon la revendication 7 ou 8, **caractérisé en ce que** les moyens de commande sont actionnés en maintenant à chaque instant la valeur maximale des tensions composées issues du vecteur tension de commande ( $\overrightarrow{V_{mot}}$ ) inférieure à la valeur maximale des tensions composées entre les phases d'entrée.

**Fig. 1**

Cel1   Cel2   Cel3

u    $i_u$    $f_{au}$    $f_{bu}$    $f_{cu}$

v    $i_v$    $f_{av}$    $f_{bv}$    $f_{cv}$

w    $i_w$    $f_{aw}$    $f_{bw}$    $f_{cw}$

n    $V_{wn}$    $V_{vn}$    $V_{un}$    $i_a$    $i_b$    $i_c$

$V_{an}$    a    $V_{bn}$    b    $V_{cn}$    c

$V_{an'}$    $V_{bn'}$    $V_{cn'}$

n'

**Fig. 2**

Vi

100%Vi    B

87%Vi    A'    A

Vs(f)

0    f1    f2    fs(Hz)

**Fig. 3**

$V_{231}$

Sr1

$V_{matrix}$
$V_{mot}$

$\Delta\theta_0$

$V_{312}$

$V_{123}$

**Fig. 4**

Sr1

Sr2

$\Delta\varphi$

$V_{matrix}$

$\Delta\theta$

$V_{mot}$

V3/3

13

**Fig. 5A**

**Fig. 5B**

**Fig. 5C**

# EP 2 360 827 A2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008049469 A

- FR 0858759

**Littérature non-brevet citée dans la description**

- **AKIO ISHIGURO ; TAKESHI FURUHASHI ; SHIGERU OKUMA.** A novel control method for forced commutated cycloconverters using instantaneous values of input line-to-line voltages. *IEEE TRANSACTIONS ON INDUSTRIAL ELECTRONICS,* Juin 1991, vol. 38 (3